# EUROPEAN PATENT APPLICATION

(11) **EP 1 458 219 A2**
(43) Date of publication of application: **15.09.2004**
(21) Application number: 04005560.0
(22) Date of filing: 09.03.2004
(51) Int. Cl.: H05B 6/70, B60N 3/16

(54) **Distributed microwave system**

(30) Priority: 11.03.2003 US 320002 P
(71) Applicant: WHIRLPOOL CORPORATION, Benton Harbor Michigan 49022 (US)
(72) Inventor: Slone, Carolyn L., V.le G: Borghi 27 21025 Comerio (IT); Carlsson, Hakan, V.le G: Borghi 27 21025 Comerio (IT); Nordh, Ulf, V.le G: Borghi 27 21025 Comerio (IT); Braunisch, Ekhart, V.le G: Borghi 27 21025 Comerio (IT)
(74) Representative: Guerci, Alessandro

(57) **Abstract**

A distributed microwave system comprising a single microwave source that can be used to supply one or more microwave-using devices. The microwave source is located remotely from the microwave-using devices and connected thereto by a microwave conduit.

## Description

### Field of the Invention:

The invention generally relates to a distributed microwave system comprising a single microwave generator that supplies microwaves to one or more microwave-using devices located remotely from the microwave generator. In one implementation, the invention relates to using the distributed microwave system in the form of a cup warmer in a vehicle where the cup warmer is a microwave-using device that is supplied microwaves by a microwave generator located remotely from the cup warmer.

### Description of the Related Art:

Drinking beverages, such as coffee, soda, water, while in a vehicle has become commonplace, if not an expected part of the vehicle culture. In fact, vehicles are constantly being designed and redesigned to accommodate different size beverage containers and to accommodate more beverage containers. Many vehicles are marketed based on the number of cup holders in the vehicle.

For consumers of hot beverages, such as coffees, the consumption of the hot beverages in cars has a disadvantage in that there is currently no easy way to keep the hot beverage warm or to reheat the hot beverage if it cools below the desired temperature. This is especially a problem on trips were the consumers are in the vehicle for extended periods of time.

Some vehicles have attempted to provide a cup holder that contains a warmer in the form of a thermoelectric device for keeping the contents of the cup warm. The thermoelectric devices previously used in vehicles generally only had sufficient thermal output to keep the contents of the cup warm and do not have sufficient thermal output to reheat the contents of the cup once the contents cooled.

Therefore, there still a desire to have a cup warmer in a vehicle that is not only capable of maintaining the warmth of the contents of the cup, but can also reheat the contents of the cup if the contents are allowed to cool.

In addition to having a cup warmer that is capable of reheating the contents of the cup, vehicle users also have a desire to reheat food items while in the vehicle. Again, this is especially desirable for long trips where the vehicle users are in the car for extended periods of time, especially during mealtimes. The cooking or heating of food in the vehicle is especially useful when the vehicle users include small children who's boredom can be averted by a parent providing them with heated food or a warmed snack.

### SUMMARY OF THE INVENTION

The invention relates to a vehicle in combination with a distributed microwave cooking system for cooking and warming food items and beverages within the vehicle. The distributed microwave cooking system comprises a microwave cooking element that is located within the vehicle and accessible by a user of the vehicle. A microwave generator is located within the vehicle and is remotely spaced from the microwave cooking element. A microwave conduit connects the microwave generator to the microwave cooking element such that the microwaves generated by the microwave generator are directed to the microwave cooking element through the microwave conduit to cook an item with the microwave cooking element.

The microwave conduit can comprise a coaxial cable that carries the microwaves from the microwave generator to the cooking element. The microwave conduit can further comprise a waveguide that is connected to the output of the microwave generator and to one end of the coaxial cable. The waveguide directs the microwaves from the microwave generator to the coaxial cable for distribution to the cooking element.

The distributed microwave cooking system can include multiple microwave cooking elements located in the vehicle and connected thereto through the microwave conduit. In such a configuration where the microwave generator supplies multiple microwave cooking elements, the microwaves can be distributed to the multiple cooking elements in different manners. One manner of connecting the multiple cooking elements to the microwave generator is to provide the coaxial cable with a splitter having multiple outputs. A feeder coaxial cable is then connected to each of the outputs into a corresponding cooking element. Another manner is to provide the waveguide with multiple channels and have a single coaxial cable extending from each of the channels of the waveguide and connecting to a corresponding cooking element.

Although the cooking element can be located anywhere in the vehicle, it is preferred that the cooking element be located within the passenger compartment. Similarly, the microwave generator can be located anywhere within the vehicle. However, it is preferred that the microwave generator be located in a remote location in the vehicle since it is not necessary for the user to have access to the microwave generator. Areas such as the trunk or engine compartment of the vehicle are the preferred location for the microwave generator.

The cooking element can take on several different forms. One form for the cooking element is a selectively closable cavity. A selectively closable cooking cavity is ideal for being located within several traditional structural features of the vehicle. For example, the selectively closable cooking cavity can be located within a center console, armrest, dashboard, or glove box of the vehicle. Another form for the cooking cavity is a heating plate that is microwave lossy and which radiates heat when exposed to the microwaves.

If the selectively closable cooking cavity is located within the passenger compartment and is desired to hold a cup, then it is preferred that the cooking element be formed in a housing having an open-top recess that defines the cooking cavity and a cover that is movably mounted to the housing for selectively closing the open-top recess. A cup support can be provided in the open-top recess and is used to support the bottom of a cup which is placed within the cooking cavity.

In a cup-warming configuration such as the open-top cooking cavity, the microwaves can be supplied thereto by different methods. One method is for the coaxial cable carrying the microwaves to have an inner conductor, an portion of which can extend into the open-top cooking cavity to form an antenna for transmitting the microwaves into the cooking cavity to directly radiate the contents of the cup. Another method is for the open-top cooking cavity to further include a heating element that is directly connected to the coaxial cable and is made from a microwave lossy material such that the heating element is heated upon receipt of the microwaves. Preferably, the cup support is one in the same as the heating element.

Various sensors can be used to and in the warming and heating of the food items, especially with the warming and heating of the beverages and a cup. For example, a temperature sensor can be located within the open-top cooking cavity to help in determining the temperature of the contents of the cup as it is heated. One such temperature sensor can be an infrared sensor that is located on the cover at a position such that the sensor overlies the top of the cup. Another sensor is that of a temperature probe that can be located within the open-top cooking cavity such that it extends into the liquid in the cup when the cover is closed.

Another useful sensor is that of a load detection sensor for determining if the cup contains sufficient liquid for warming or heating. The load detection sensor can be a weight sensor that detects the weight of the cup and its contents. The load detection sensor can also be a microwave sensor that detects the amount of microwaves not absorbed by the load, which can be used to indicate the size of the load.

In another aspect, the invention relates to a microwave cup warmer for a vehicle and which comprises a microwave cooking element for warming the contents of a cup therein. A microwave generator is located remotely from the microwave cooking element. A microwave conduit connects the microwave generator to the microwave cooking element such that the microwaves generated by the microwave generator are directed to the microwave cooking element through the microwave conduit to cook an item with the microwave cooking element.

In yet another aspect, the invention relates to a distributed microwave cooking system, which comprises a microwave generator having an output for providing a single source of microwave energy. Multiple cooking elements are provided and are spaced remotely from the microwave generator. A microwave conduit connecting each of the cooking elements to the microwave generator in such a manner that the microwave energy generated by the microwave generator is distributed to each of the multiple cooking element through the microwave conduit.

The microwave conduit can comprise a coaxial cable that carries microwaves from the microwave generator to at least one of the cooking elements. The microwave conduit can further comprise a waveguide that is connected to the output of the microwave generator and one end of the coaxial cable to direct the microwaves from the microwave generator to the coaxial cable for distribution to at least one of the cooking elements.

In such a configuration where the microwave generator supplies multiple microwave cooking elements, the microwaves can be distributed to the multiple cooking elements in different manners. One manner of connecting the multiple cooking elements to the microwave generator is to provide the coaxial cable with a splitter having multiple outputs. A feeder coaxial cable is then connected to each of the outputs and a corresponding cooking element. Another manner is to provide the waveguide with multiple channels and have a single coaxial cable extending from each of the channels of the waveguide and connecting to a corresponding cooking element.

The microwave cooking elements can have different configurations. One suitable configuration is that the microwave cooking element is a selectively closable cooking cavity that can receive and item or container for cooking. Another suitable configuration is that of a microwave heating element that is heated upon receipt of the microwaves. The selectively closable cooking cavity can be used in conjunction with the microwave heating element. In such a configuration, the microwave heating element would be placed within the microwave cooking cavity.

The microwave cooking cavity can be incorporated into many well-known structures. For example, the cooking cavity could be that cavity of a traditional microwave, a traditional oven, or of a warming drawer. Also, in the context of a vehicle, the microwave cooking cavity could be formed in an arm rest, console, dashboard, or glove box. The microwave heating element could be used in any of these environment also.

### DESCRIPTION OF THE DRAWINGS

Figure 1 is a top, rear perspective view of a vehicle incorporating a distributed microwave cooking system according to the invention, including cooking cavities in the form of a cup holder and a glove box, which are supplied by a remotely located microwave generator.
Figure 2 is a schematic view of the plan form for the vehicle of Figure 1 and illustrating the location of the microwave generator and cooking cavities, along with their connection by microwave conduits according to the invention.
Figure 3 is a schematic illustration of a microwave generator in the form of a magnetron in combination with a microwave conduit in the form of a waveguide being in combination with a coaxial cable for distributing the microwaves from the magnetron to the cooking cavities.
Figure 3A is similar to Figure 3, except that is shows a coaxial cable splitter attached to the coaxial cable and feeder coaxial cables extending therefrom.
Figure 4 is a schematic illustration of the interface between the coaxial cable and the cup warming cooking cavity.
Figure 5A is a sectional view of a first alternative configuration for the cup warmer cooking cavity formed in a console of a vehicle, with the cavity being defined by the console housing and a movable cover for the housing, and incorporating an infrared temperature sensor.
Figure 5B is a sectional view of a second alternative configuration for the cup warmer cooking cavity formed in a console of the vehicle, and incorporating a temperature probe temperature sensor.
Figure 6 is a schematic illustration of a load sensor for determining the load of the contents in the cup warming cooking cavity in the form of a sensor for determining the unused portion of the microwaves.
Figure 7A is a schematic illustration of an alternative load sensor in the form of a weight sensor shown in a first position.
Figure 7B is a schematic illustration identical to Figure 7A and showing the weight sensor in a second position.
Figure 8 is a front view of a traditional kitchen incorporating a microwave distribution system according to the invention.

### DESCRIPTION OF THE PREFERRED EMBODIMENTS

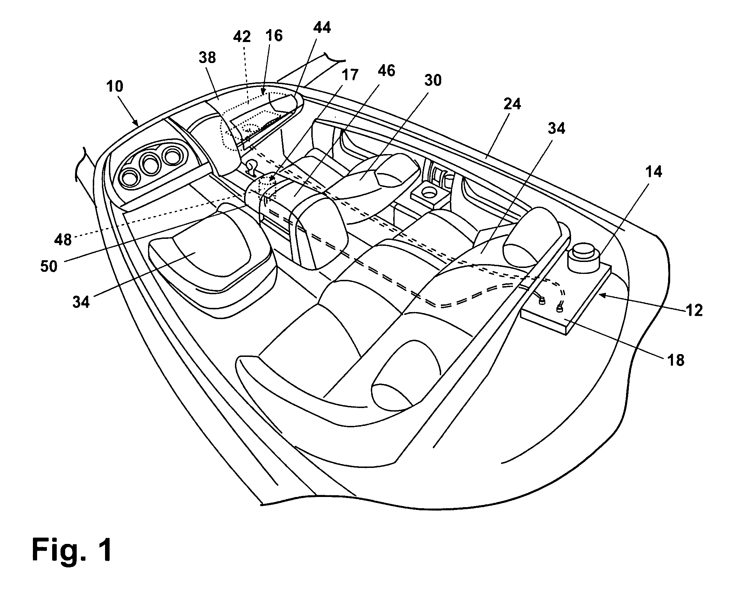

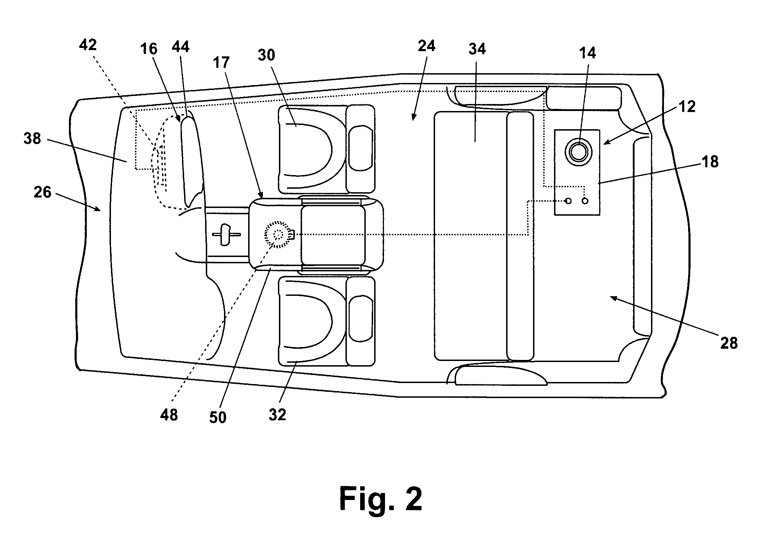

Figures 1 and 2 illustrate a vehicle 10 incorporating a distributed microwave system 12 comprising a microwave generator 14 operably coupled to cooking elements 16, 17 by a microwave conduit 18. The microwave generator 14 is remotely located from the cooking elements 16, 17 and is used to generate microwaves that are supplied to the cooking elements 16, 17 by the microwave conduit 18 such that the cooking elements can cook items as desired by a user of the vehicle 10. For purposes of this disclosure, in addition to their normal meeting, the terms cook or cooking include the warming and heating of items.

As illustrated, the vehicle 10 is a traditional sedan configuration comprising a passenger compartment 24 located between an engine compartment 26 and a trunk 28. The passenger compartment 24 includes individual front seats 30, 32 and a bench rear seat 34. A center console 36 incorporating the cooking element 17 is located between the spaced front seats 30, 32. A dashboard 38 is located in front of the front seats 30, 32 and adjacent the engine compartment 26 and houses the cooking element 16. The rear seat 34 is located adjacent the trunk 28. While the invention is described in the context of a sedan configuration, the invention is applicable to any type of vehicle.

As shown in Figures 1 and 2, the microwave generator 14 is located in the trunk of the vehicle, remotely from the cooking elements 16, 17, since it is not anticipated that the user will need to frequently access the microwave generator 14. The microwave generator 14 can be located in other remote portions of the vehicle, such as the engine compartment 26. Another suitable location for the microwave generator is beneath the front seats 30, 32 or rear seat 34.

The cooking elements 16, 17 can take many forms. It is anticipated that the preferred forms will include a cooking cavity in which food items can be placed for cooking and/or a heating element on which food items can be placed for cooking. It is contemplated that a heating element can be used in combination with a cooking cavity.

The cooking elements 16, 17 are illustrated as being of the cooking cavity type. The cooking element 16 is formed by a cooking cavity 42 that is located within the dashboard 38 of the vehicle 10 at the traditional location for a glove box, with a door 44 being provided for selectively closing the cooking cavity 42. In this manner, the cooking cavity 42 can replace a traditional glove box and function as a traditional microwave, located within the vehicle for cooking foods disposed therein. The cooking element 16 is essentially a small capacity microwave oven, which is well suited for warming and heating cooked and uncooked foods, and is especially useful for making microwave popcorn.

The cooking element 17 is also of the cooking cavity type and is formed by a cooking cavity 48 formed in the center console 36 of the vehicle, with a cover 50 of the console functioning as a door for selectively closing the cooking cavity 48. It is anticipated that the cooking cavity 48 will be positioned in the center console 36 at the traditional location for a cup holder. Therefore, the cooking cavity 48 can perform the dual role of being a cup holder in addition to cooking the contents contained within the cup. A preferred use of the cooking cavity 48 would be to maintain the temperature of the contents of the cup or reheat the contents of the cup is desired by the user.

Although the cooking cavity 17 is shown in the center console, such a cooking cavity could be located elsewhere in the vehicle, such as an arm rest, seat, and dashboard. There could also be multiple cup warmer cooking cavities located throughout the passenger compartment and even in the trunk or vehicle compartment.

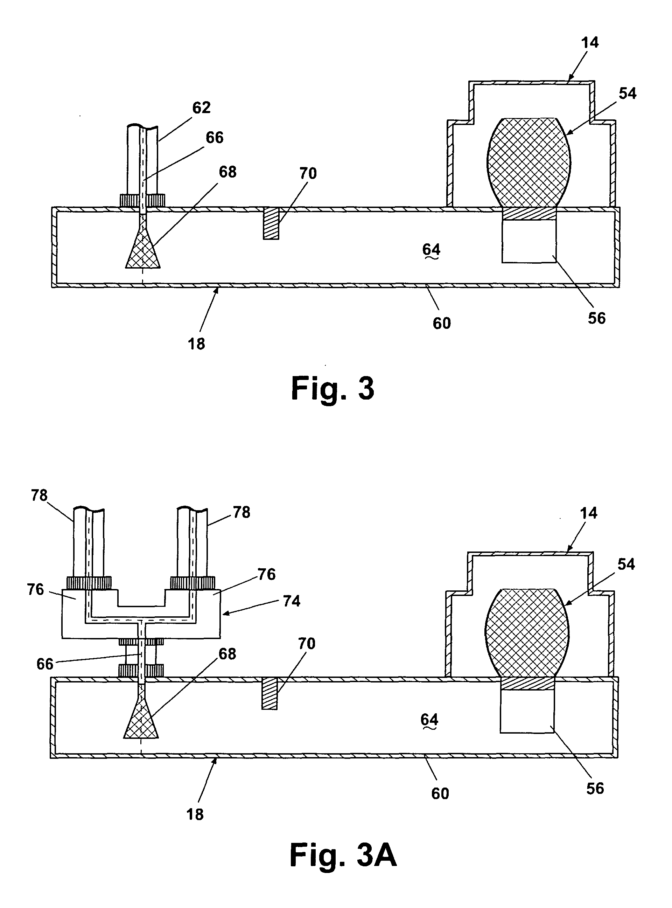

Figures 3-5 illustrate in greater detail the structure of the components of the distributed microwave system 12. Figure 3 shows the details of the microwave generator 14 and conduit 18. As illustrated, the microwave generator 14 comprises a traditional magnetron 54 having an antenna 56. The magnetron 54 generates the microwaves, which are then transmitted through the antenna 56 into the conduit 18 for distribution to the cooking element 16, 17.

While the microwave generator 14 is illustrated as being a traditional magnetron 54, it is within the scope of the invention for other microwave generators 14 to be used. For example, solid-state microwave generators are well known can also be used.

The microwave conduit 18 comprises a waveguide 60 and a coaxial cable 62. The waveguide 60 is of a traditional construction that is well-known in the art. The waveguide 60 defines an interior channel 64 into which the antenna 56 of the magnetron 54 extends near one and of the channel 64. The interior dimensions of the channel 64 can be selected such that the waveguide will propagating a particular mode for the microwave generated by the magnetron. Preferably, channel 64 is sized such that propagated mode is TE_{10.}

The coaxial cable 62 has an outer conductor (not shown) and an inner conductor 66 that extends into the channel 64 of the waveguide 60. The inner conductor 66 has an end portion 68 that is tapered and extends into the channel 64 of the waveguide 60. The end portion 68 functions as an antenna to receive the microwaves transmitted from the antenna 56 of the magnetron 54. The tapered shape of the end portion 68 improves the performance of the inner conductor 66 as a receiving antenna. Preferably, the end portion 68 of the inner conductor 66 is located approximately 1/4 wavelength away from the downstream end of the waveguide 60.

An impedance tuner 70 is located within the channel 64 of the waveguide 60 between the antenna 56 of the magnetron 54 and the tapered portion 68 of the inner conductor 66. The location and size of the impedance tuner 70 can be varied as need be.

The conduit 18 as illustrated preferably comprises a waveguide 60 having a channel 64 for each of the cooking elements 16, 17 that is to be supplied microwaves from the microwave generator 14. A separate coaxial cable 62 extends from each of the channels 64 to the corresponding cooking element 16, 17. In a configuration where the waveguide comprises an individual channel 64 supplying each of the cooking elements 16, 17, the antenna 56 of the magnetron 54 is generally open to each of the channels 64 in such a manner that the microwave generated by the magnetron 54 will be transmitted down both channels 64 to the corresponding coaxial cable 62. The individual channels can essentially be considered a separate waveguide.

Figure 3A illustrates another method for distributing the microwaves from the microwave generator 14 to the multiple cooking element 16, 17. Instead of using a waveguide 60 with multiple channels 64 and each channel having a corresponding coaxial cable 62, a waveguide 60 with a single channel 64 can be used that supplies microwaves to the coaxial cable 62 in the same manner as described for Figure 3. A signal splitter 74 is mounted to the coaxial cable 62 to distribute the microwaves to the cooking elements. The signal splitter has multiple discrete signal outputs 76. The signal splitter 74 effectively separates the microwave signal passing through the coaxial cable 62 into multiple discrete signals exiting the outputs 76. Feeder coaxial cables 78 extend from the outputs 76 and are coupled to the corresponding cooking element 16, 17 to supply them with the microwaves. Although the splitter 74 is shown as having only two outputs, it is within the scope of the invention for the splitter 74 to have any number of outputs.

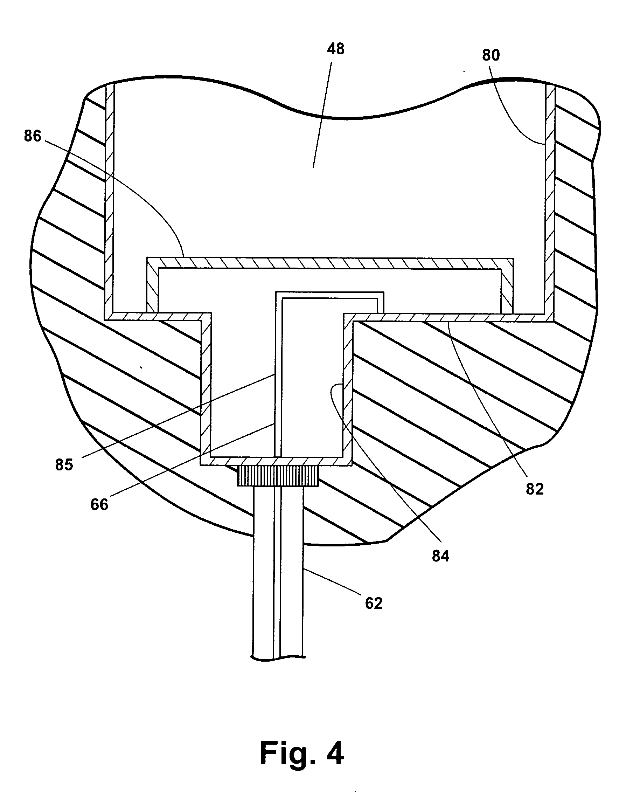

Figure 4 illustrates the connection of the coaxial cable 62 to the cooking cavity 48 of the cup warmer cooking element 17. The cooking cavity 48 comprises a peripheral sidewall 80 that extends upwardly from a bottom wall 82. A recess 84 is formed in a bottom wall 82 and mounts the end of the coaxial cable 62. The inner conductor 66 of the coaxial cable extends through the recess 84 and has a terminal end that is fixedly mounted to the bottom wall 82. The portion of the inner conductor 66 that extends into the recess 84 functions as an antenna 85 for transmitting microwaves into the cooking cavity 48 for cooking the contents of the cup placed therein.

A cup support 86 extends from the bottom wall 82 and is preferably located above the antenna 85. The cup support 86 supports the bottom of a cup placed within the cooking cavity 48 above the antenna 85. As illustrated in Figure 4, it is anticipated that the cup support 86 will be made of a microwave transparent material such that it does not impair the transmission of the microwaves throughout the cooking cavity 48. However, it is within the scope of the invention for the cup support 86 to be made from a microwave lossy material and the coaxial cable 62 be coupled directly to the cup support such that the microwave energy will be transmitted directly into the cup support 86, which will result in the heating of the cup support 86. The heated cup support 86 can be used to heat the contents in the cup placed thereon by conduction and convection.

While Figure 4 illustrates the connection of the coaxial cable 62 to the cooking cavity of the cup warmer cooking element 17, a similar connection can be used to connect the coaxial cable 62 to the cooking cavity 42 of the cooking element 16. For that matter, the connection of the coaxial cable to the cooking cavity as illustrated in Figure 4 can be used for any cooking cavity type configuration.

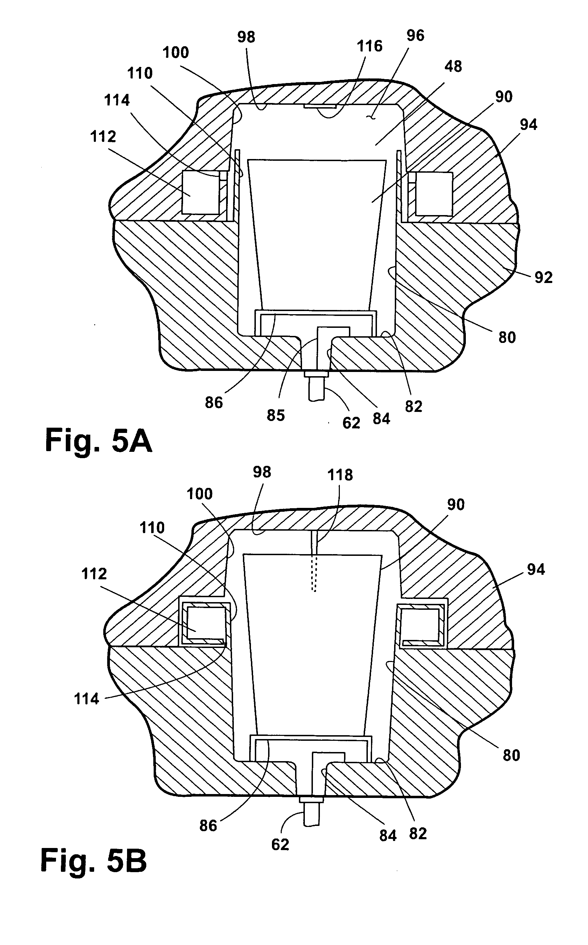

Referring now to Figures 5A and 5B, alternative configurations for the cooking cavity 48 are illustrated. The configuration as illustrated in Figure 5A illustrates an open top cavity 48 defined by the peripheral wall 80 extending from the bottom wall 82, which has a recess 84 through which the antenna 85 passes as illustrated in Figure 4. The height of the recess 48 is approximately equal to or slightly greater than the greatest anticipated height of a cup 90 placed within the open-top cooking cavity 48.

The cooking cavity 48 is formed in a base portion 92 of the console 36. The console 36 also includes a movable portion 94 forming the cover 50 for the cooking cavity 48. The movable portion 94 includes an open-bottom recess 96 comprising a top 98 from which depend a peripheral wall 100.

A seal is provided to prohibit the escape of microwaves from the cooking cavity 48 when the movable portion is in the closed position as illustrated in Figure 5A. The seal is formed by a planar portion or rim 110 of the peripheral wall 80 in combination with a pocket 112 formed in the movable portion 94. The pocket 112 includes multiple openings 114, which expose the pocket 112 to the cooking cavity 48. The planar portion 110 of the peripheral wall 80 has a height that extends beyond the openings 114. The pocket 112 is sized such that it acts as a1/4 wave choke for the microwaves.

A temperature sensor in the form of an infrared sensor 116 is located on the top wall 98 of the movable portion 94. Preferably, the infrared sensor 116 is positioned on the top wall 98 such that it can sense the temperature of the contents within the cup 90.

The alternative configuration shown in Figure 5B is similar to the configuration shown in Figure 5A, except that the peripheral wall 80 does not extend to or beyond the upper end of the cup 90 and the seal only comprises the choke 112, which is formed in the base 92.

A temperature sensor in the form of a temperature probe 118 extends from the top wall 98 of the movable portion 94. Preferably, the temperature probe 118 is of a length that it will extend into the cup 90 a sufficient distance to contact the contents of the cup therein. The temperature probe 118 can be mounted to the movable portion 94 in such a manner that it is withdrawn when the cover is opened and extends as shown in Figure 5B only when the cover is closed.

The cup warmer cooking cavity construction illustrated in Figure 5A provides better support for the cup 90 than the configuration shown in Figure 5B since the peripheral wall 80 extends substantially along the entire height of the cup 90 as compared to the height of the peripheral wall 80 in Figure 5B. However, the cup warmer cooking cavity configuration of Figure 5B provides the user with more convenient access to the cup 90 than the configuration of Figure 5A. Since the upper end of the cup 90 extends above the peripheral wall 80 in the configuration of Figure 5B, it is much easier for the user to grasp the rim of the cup and lift the cup from the cavity 48.

Figures 5A and 5 B only show two possible configurations for the cooking cavity 48. The ratio of the peripheral wall 80 and the peripheral wall 100 for the base 92 and the cover 94, respectively, can be varied as need be or desired. In effect, the cooking cavity 48 can be formed both by one or both of the base 92 and the cover 94.

Although not shown, an open-door sensor can be incorporated into one of the movable portion 94 or the base 92. Preferably, such an open-door sensor would comprise a switch mounted to one of the movable portion 94 and base portion 92, which contacts the other of the movable portion 94 and base portion 92. The opening and closing of the movable portion relative to the base will result in a change in status of the switch thereby indicating whether the movable portion is closed. The open-door sensor can be used to prevent the sending of microwaves to the cooking cavity 48 when the cover 50 is opened.

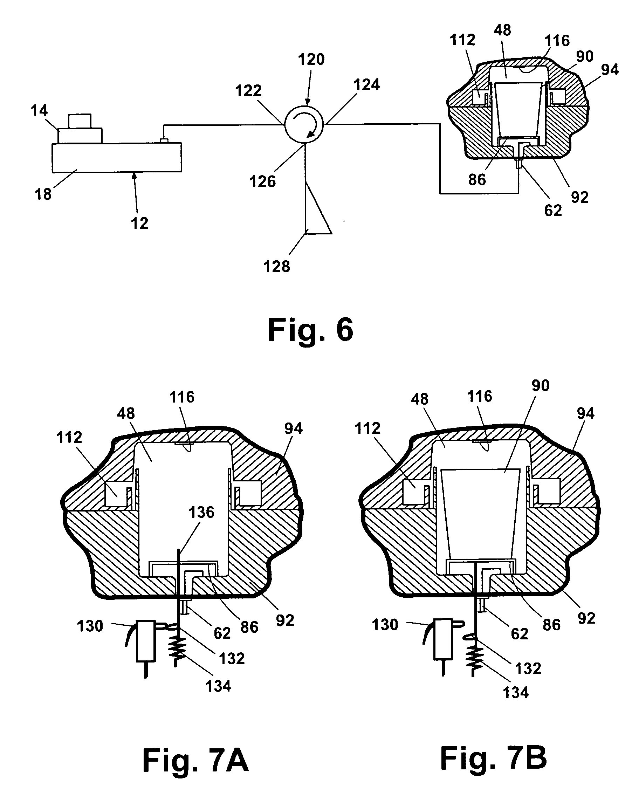

Figures 6 and 7 illustrate load sensors for use with the distributed microwave system 12 to indicate the existence of a load within the cooking cavity 48. If there is no load in the cooking cavity 48, it is desirable not to transmit microwaves into the cooking cavity as they may damage the material forming the cooking cavity. In the context of a cup warmer as illustrated in Figures 6 and 7, the load sensors are used to determine whether the cup 90 contains a sufficient amount of beverage such that microwaves can be introduced into the cooking cavity 48 without its damage.

In Figure 6, the load sensor comprises a circulator 120 having an inlet port 122, an outlet port 124, a dummy port 126. The inlet and outlet ports 122, 124 are connected in line to the coaxial cable 62. The dummy port 126 is connected to a dummy load 128 having a temperature sensor. When microwaves are transmitted down the coaxial cable 62 they enter the circulator 120 at the inlet port 122 where they exit at the outlet port 124, and are received within the cooking cavity 48. The microwaves that are not absorbed by the load in the cup 90 exit the cooking cavity 48 through the external conductor of the coaxial cable 62 where they re-enter the circulator 120 through the outlet port 124. The circulator 120 directs the returning microwaves down the dummy port 126 to the dummy load 128. The microwaves raise the temperature of the dummy load 128. The temperature increase in the dummy load is monitored by its temperature sensor. The change in temperature of the dummy load 128 is indicative of the quantity of microwaves not absorbed by the load within the cup 90, which can be used to determine whether the load in the cup 90 is sufficient for the microwaves to be safely introduced into the cooking cavity. Preferably, the control wall will have a safety setting where once the temperature of the dummy load crosses a threshold temperature, no further transmission of microwaves to the cooking cavity 48 will be permitted.

Figures 7A and 7B illustrate an alternative load sensor in the form of a weight sensor that determines the weight of the container 90 and its contents. If the weight of the container 90 and its contents exceed a threshold value, then it is safe for microwaves to be introduced into the cooking cavity 48 without damage.

As illustrated, the weight sensor comprises a switch having one fixed contact 130 and one movable contact 132. The movable contact 132 is mounted to a compressible spring 134. The spring has a tip 136 and extends into the cavity 48 beyond the cup support 86. When there is no cup 90 resting on the cup support 86, the tip 136 of the spring 134 will be in its naturally extended position and the moveable contact 132 will be in physical contact with the fixed contact 130, placing the switch in the closed position and thereby indicating that no load exists within the cooking cavity 48. However, as illustrated in Figure 7B, when a cup is placed within the cooking cavity 48 and on the cup support 86, the bottom of the cup will contact the tip 136 of the compressible spring 134. The weight of the cup 90 and its contents will compress the compressible spring 134 moving axially downwardly to thereby move the movable contact 132 out of physical contact with the fixed contact 130 to open the switch. The open state of the switch indicates that a cup is positioned within the cooking cavity 48 and that it is safe to introduce microwaves into the cooking cavity 48.

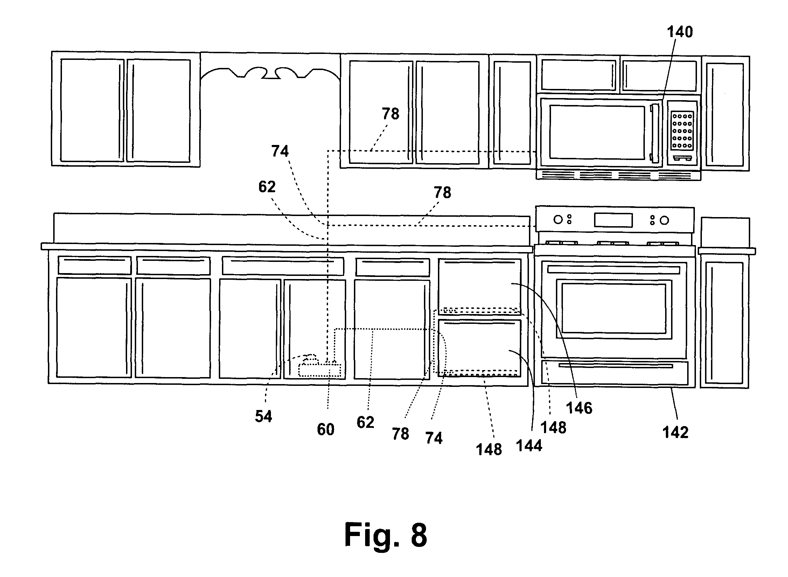

While the preferred implementation of the distributed microwave system in accordance with the invention is in the environment of a vehicle as described above, the distributed microwave system is applicable to other environments. Figure 8 illustrates one such alternative environment, which is a traditional kitchen having appliances comprising a microwave oven 140, a oven/range 142 with microwave, and warming drawers 144, 146. All of these traditional appliances can be supplied microwaves from the distributed microwave system 12 according to the invention.

Preferably, the distributed microwave system 12 is built in and located within the cabinet structure and walls of the kitchen. The microwave generator 14 and waveguide 60 are preferably located within one of the cabinets in a position that is out of sight, yet is still accessible by the user for service as need be. Coaxial cables 62 extend from the waveguide 60 and each has a splitter 74, from which extends feeder coaxial cables 78 that are coupled to appliances.

For example, one of the coaxial cables 62 splits into two feeder coaxial cables 78, one of which feeds the microwaves to the traditional microwave oven 140 and the other feeds microwaves to a traditional oven/range 142, which includes a combination oven/microwave oven. The other coaxial cable 62 has a splitter 74 that divides into two feeder coaxial cables 78, which are connected to heating elements 148 located within the bottoms of the warming drawers 144 and 146, respectively.

With this configuration, a single source of microwaves can be used to supply multiple microwave-using appliances within the kitchen. The use of a single microwave source reduces the complexity of each of the appliances which would otherwise need their own independent source. The moving of the microwave generator from the appliance to a remote location frees up space in each of the appliances that would otherwise be occupied by the individual microwave generators. This available space can be used to increase the capacity of the appliances or to provide for additional functionality, both of which are highly desirable by the user.

While the invention has been specifically described in connection with certain specific embodiments thereof, it is to be understood that this is by way of illustration and not of limitation, and the scope of the appended claims should be construed as broadly as the prior art will permit.

## Claims

1. A distributed microwave cooking system, **characterized in that**:
a microwave generator (14, 54) has an output for providing a single source of microwave energy;
multiple cooking elements (16, 17, 140, 142, 144) are located remotely from the microwave generator;
a microwave conduit (18, 62) connects each of the cooking elements to the microwave generator;
wherein the microwave energy generated by the microwave generator is distributed to the multiple cooking elements through the microwave conduits.

2. The distributed microwave cooking system according to claim 1, **characterized in that** the microwave conduit comprises a coaxial cable (62) carrying the microwaves from the microwave generator to at least one of the cooking elements.

3. The distributed microwave cooking system according to claim 2, **characterized in that** the microwave conduit further comprises a waveguide (60) connected to the output of the microwave generator and to one end of the coaxial cable to direct the microwaves from the microwave generator to the coaxial cable for distribution to the at least one of the cooking elements.

4. The distributed microwave cooking system according to claim 3, **characterized in that** the microwave conduit further comprises a splitter (74) attached to the other end of the coaxial cable, and the splitter has multiple outputs to thereby split the microwaves passing through the coaxial cable amongst the multiple outputs.

5. The distributed microwave cooking system according to claim 4, **characterized in that** the microwave conduit further comprises multiple feeder coaxial cables (78) for connecting the splitter outputs to the cooking elements.

6. The distributed microwave cooking system according to claim 3, **characterized in that** there are multiple coaxial cables and each coaxial cable connects a different cooking element to the waveguide.

7. The distributed microwave cooking system according to claim 6, **characterized in that** the waveguide (60) comprises multiple channels and each channel corresponds to one of the coaxial cables.

8. The distributed microwave cooking system according to claim 3, **characterized in that** the coaxial cable has an inner conductor that extends into a channel formed in the interior of the waveguide to permit the transmission of the microwaves from the microwave generator, through the waveguide, and into the inner conductor.

9. The distributed microwave cooking system according to claim 8, **characterized in that** the portion of the inner conductor extending into the waveguide is tapered.

10. The distributed microwave cooking system according to claim 9, **characterized in that** the portion of the inner conductor extending into the waveguide is spaced 1/4 of a wavelength of the microwaves upstream from an end of the waveguide.

11. The distributed microwave cooking system according to claim 10, **characterized in that** an impedance tuner (70) is located within the channel upstream of the portion of the inner conductor extending into the waveguide.

12. The distributed microwave cooking system according to claim 1, **characterized in that** at least one of the cooking elements is a cooking cavity.

13. The distributed microwave cooking system according to claim 1, **characterized in that** at least one of the cooking elements comprises a microwave lossy heating element that is coupled to the microwave generator by the microwave conduit resulting in the heating of the heating element in response to the receipt of the microwaves.

14. The distributed microwave cooking system according to claim 1, **characterized in that** the microwave generator is a solid-state microwave generator or a magnetron.

15. The distributed microwave cooking system according to claim 1, **characterized in that** the distributed microwave system is located within a vehicle (10) such that microwaves generated by the microwave generator (14) are directed to the microwave cooking elements (16, 17) through the microwave conduit (18) to cook an item with the microwave cooking element located within the vehicle.

16. The combination of claim 15, **characterized in that** the vehicle comprises a passenger compartment and a storage area and the microwave cooking element is located within the passenger compartment and the microwave generator is located in the storage area.

17. The combination of claim 15, **characterized in that** the passenger compartment comprises a dash and a second cooking element is located in the dash and connected to the microwave generator by the microwave conduit.

18. The combination of claim 15, **characterized in that** one of the cooking elements (17) comprises a housing having an open-top recess defining a cooking cavity sized to receive a cup, and a cover movably mounted to the housing for selectively closing the open-top cooking cavity with the cup positioned within the cavity, wherein the housing is located within the passenger compartment such that it is accessible by a user of the vehicle.
